# EUROPÄISCHE PATENTSCHRIFT

(11) **EP 4 349 742 B1**
(45) Veröffentlichungstag und Bekanntmachung des Hinweises auf die Patenterteilung: **26.11.2025**
(21) Anmeldenummer: 22199599.6
(22) Anmeldetag: 04.10.2022
(51) Int. Cl.: B65G 45/22

(54) **REINIGUNGSVORRICHTUNG FÜR TRANSPORTRIEMEN**
CLEANING DEVICE FOR CONVEYING BELTS
DISPOSITIF DE NETTOYAGE POUR COURROIE DE TRANSPORT

(43) Veröffentlichungstag der Anmeldung: 10.04.2024
(73) Patentinhaber: Neuhäuser GmbH, 44532 Lünen (DE)
(72) Erfinder: Neuhäuser, Jürgen, 44532 Lünen (DE); Henning, Michael, 44532 Lünen (DE)
(74) Vertreter: Andrejewski - Honke Patent- und Rechtsanwälte Partnerschaft mbB

(56) Entgegenhaltungen:
- DE-B4- 10 104 510
- DE-U1- 20 106 122
- FR-A7- 2 071 403
- JP-A- H06 345 242
- JP-A- S6 260 724
- JP-U- S62 144 823

## Beschreibung

Die Erfindung betrifft eine Reinigungsvorrichtung für Transportriemen, insbesondere im Zusammenhang mit der Förderung von Blechplatinen, mit einem Maschinengestell zur Führung und zum Antrieb des Transportriemens, und mit einer Luftdruckquelle zur Erzeugung eines Unterdruckes in einem Saugschlitz, wobei der Transportriemen den Saugschlitz zur Reinigung fortlaufend passiert.

Transportriemen zur Förderung von beispielsweise Blechplatinen werden oftmals im Zusammenhang mit sogenannten Riemenförderern eingesetzt, wie sie beispielhaft in der DE 101 04 510 B4 der Anmelderin im Detail beschrieben werden. Die Blechplatinen lassen sich dabei sowohl hängend als auch aufliegend auf dem betreffenden Transportriemen in seiner Längserstreckung befördern. Um die einzelnen Blechplatinen gegenüber dem Transportriemen zu fixieren, kann entweder mit einem durch Elektromagneten erzeugten fortschreitenden Magnetfeld oder mit einer Unterdruckquelle oder auch unter Rückgriff auf beide Einrichtungen gearbeitet werden. Das hat sich grundsätzlich bewährt.

Allerdings besteht bei solchen Riemenförderern oder allgemeinen Vorrichtungen zum Transport von Werkstücken unter Rückgriff auf Transportriemen das Problem, dass die fraglichen Blechplatinen von einer zur anderen Bearbeitungsstation befördert werden. Dabei sind die Blechplatinen oftmals mit Öl benetzt und weisen zusätzlich anhaftende Späne aus vorgeschalteten Bearbeitungsschritten auf. Das führt insgesamt dazu, dass die die Blechplatinen bewegenden Transportriemen verschmutzen oder zunehmend verschmutzen können. Diese Verschmutzungen führen dazu, dass die Blechplatinen unter Umständen nicht mehr richtig auf dem Transportriemen festgehalten werden können oder sogar vom Transportriemen abrutschen.

Das ist aus zweierlei Hinsicht problematisch. Zunächst einmal können vom Transportriemen abrutschende Blechplatinen auf diese Weise beschädigt werden und sind für die weitere Verarbeitung oftmals unbrauchbar. Hinzu kommt, dass das Abrutschen der Blechplatinen eine Gefahrenquelle für Bedienpersonal darstellt. Aus diesem Grund gibt es bereits Ansätze im Stand der Technik dahingehend, die Transportriemen während ihres bestimmungsgemäßen Gebrauches oder auch unabhängig hiervon zu reinigen. Dabei wird oftmals in der Praxis auf eine mechanische Reinigung mit Bürsten zurückgegriffen.

Eine solche Reinigungsvorrichtung für einen Transportriemen mit Hilfe von Reinigungsbürsten beschreibt die Gebrauchsmusterschrift CN 211919994 U. Dazu werden Reinigungsbürsten an den Transportriemen angestellt und wird der Transportriemen mit den Reinigungsbürsten beaufschlagt. Die Reinigung mit solchen Bürsten ist in diesem Zusammenhang mit den generellen Nachteilen verbunden, dass hierdurch der Transportriemen verschleißt oder verschleißen kann. Auch sind Beschädigungen möglich, die bis hin zum Nichtgebrauch führen können.

Die DE20106122 U1 betrifft eine Fördervorrichtung mit mindestens einem umlaufend angeordneten Förderband, das eine Transportfläche bildet, an der die zu transportierenden Gegenstände während ihres Transports anliegen, und mit einer dem Förderband zugeordneten, die Transportfläche reinigenden Reinigungseinrichtung. Die DE20106122 U1 offenbart dabei eine Reinigungseinrichtung nach dem Oberbegriff des Anspruchs 1.

Beim gattungsbildenden Stand der Technik nach der DE 42 26 406 A1 wird so vorgegangen, dass ein Riemen mittels Besaugung beaufschlagt wird. Dazu wird der Riemen durch ein Saugrohr hindurchbewegt und zusätzlich an dem Saugrohr abgestreift. Das führt im Endeffekt erneut auf eine mechanische Beaufschlagung hinaus und kann wiederum in Beschädigungen des Transportriemens resultieren. Hier will die Erfindung insgesamt Abhilfe schaffen.

Der Erfindung liegt das technische Problem zugrunde, eine derartige Reinigungsvorrichtung für Transportriemen so weiterzuentwickeln, dass bei gegenüber dem Stand der Technik zumindest gleichbleibender Reinigungswirkung etwaige Beschädigungen des Transportriemens verhindert werden.

Zur Lösung dieser technischen Problemstellung schlägt die Erfindung ausgehend von dem zuvor skizzierten Stand der Technik vor, dass die Luftdruckquelle eine am Transportriemen anliegende Luftführungsplatte mit einem Überdruck beaufschlagt, so dass die durch den Saugschlitz zwischen Luftführungsplatte und Transportriemen strömende sowie vorzugsweise beschleunigte Luft durch einen dadurch an der Riemenoberfläche erzeugten Unterdruck Verunreinigungen löst und abtransportiert, wobei der Transportriemen zwischen der Luftführungsplatte und einer Gegenplatte aufgenommen wird.

Im Rahmen der Erfindung kommt also zunächst einmal eine Luftdruckquelle zum Einsatz, die den Transportriemen bzw. dessen zu reinigende Oberfläche mit Überdruck beaufschlagt. Tatsächlich hat sich hier ein Überdruck von lediglich 1 bis 2 bar (gegenüber dem Normalluftdruck) als ausreichend erwiesen, so dass mit einer einfach aufgebauten Luftdruckquelle gearbeitet werden kann, die darüber hinaus zu geringen Betriebskosten korrespondiert.

Mit Hilfe der Luftdruckquelle, die den geschilderten Überdruck zur Verfügung stellt, wird nun an der zu reinigenden Oberfläche des Transportriemens ein Unterdruck erzeugt. Das lässt sich im Endeffekt auf das sogenannte hydrodynamische Paradoxon zurückführen. Danach kommt es im Hinblick auf den von der Luftdruckquelle erzeugten Überdruck und bei seiner Ablenkung in den Saugschlitz zum gewünschten Unterdruck im Randbereich der Strömung, folglich an der zu reinigenden Oberfläche des Transportriemens. Dieser Unterdruck sorgt dann seinerseits dafür, dass auf der zu reinigenden Oberfläche des Transportriemens befindliche Verunreinigungen gelöst und zusammen mit dem Luftstrom abtransportiert werden. Bei den fraglichen Verunreinigungen kann es sich sowohl um feste als auch flüssige Verunreinigungen handeln, so dass die zu reinigende Oberfläche des Transportriemens nach der Reinigung im Regelfall insbesondere öl- und spänefrei ausgebildet ist.

Das alles gelingt berührungsfrei und ohne mechanische Hilfsmittel wie beispielsweise Bürsten, so dass eine Beschädigung des Transportriemens und insbesondere der zu reinigenden Oberfläche prinzipbedingt ausgeschlossen werden kann. Durch den an der zu reinigenden Oberfläche des Transportriemens angreifenden Unterdruck wird ein etwaiger Ölfilm hierdurch gleichsam abgestreift. Dabei versteht es sich, dass dem seitens der Luftdruckquelle mit Überdruck erzeugten Luftstrom bei Bedarf selbstverständlich ein Reinigungsmittel beigemengt werden kann. Hierin sind die wesentlichen Vorteile zu sehen.

Wie bereits erläutert, liegt an dem Transportriemen die Luftführungsplatte an, welche mit dem beschriebenen Überdruck beaufschlagt wird. Zwischen der Luftführungsplatte und dem Transportriemen bildet sich der Saugschlitz aus, durch welchen die unter Überdruck stehende Luft hindurchströmt und gleichsam ein Luftpolster definiert. Dabei liegt die zu reinigende Oberfläche des Transportriemens an der Luftführungsplatte an.

Im Rahmen einer vorteilhaften Ausgestaltung ist die Luftführungsplatte an den Transportriemen angestellt. Zur Anstellung der Luftführungsplatte wird meistens auf zumindest eine Feder zurückgegriffen. Im Regelfall sind wenigstens zwei in Axialerstreckung der Luftführungsplatte angeordnete Federn vorgesehen.

Die Luftführungsplatte verfügt regelmäßig und zumindest über eine mit dem Saugschlitz kommunizierende Öffnung. Meistens sind mehrere Öffnungen in der Luftführungsplatte vorgesehen. Dabei ist die Auslegung weiter so getroffen, dass die jeweilige Öffnung einerseits mit dem Saugschlitz kommuniziert und andererseits an die Luftdruckquelle angeschlossen ist. Zur Umlenkung des Luftstromes ausgehend von der Luftdruckquelle ist die Auslegung dann noch weiter so getroffen, dass die fragliche Öffnung in der Luftführungsplatte überwiegend senkrecht zur Längserstreckung des Saugschlitzes verläuft.

Auf diese Weise strömt die unter Überdruck stehende Luft durch die Öffnung in den Saugschlitz hinein und wird hierbei größtenteils senkrecht umgelenkt. Infolge des anstehenden Überdruckes und der sich ausbildenden Luftströmung kommt es nun zur Ausbildung des bereits angesprochenen Luftpolsters bzw. dem Saugschlitz zwischen der Luftführungsplatte und dem Transportriemen. Das hat zur Folge, dass an der den Saugschlitz begrenzenden und zu reinigenden Oberfläche des Transportriemens der gewünschte Unterdruck aufgrund des hydrodynamischen Paradoxons beobachtet wird und hier für die Ablösung der Verunreinigungen sorgt.

Die weitere Auslegung ist dann noch vorteilhaft so getroffen, dass die Luftführungsplatte der Längserstreckung des Transportriemens folgt. Da der Transportriemen überwiegend als längserstrecktes und um jeweils Rollen geführtes Band ausgebildet ist, verfügt auch die Luftführungsplatte über eine entsprechende längserstreckte Auslegung, wobei die Längserstreckung des Transportriemens und diejenige der Luftführungsplatte in gleicher Richtung beobachtet werden.

Darüber hinaus verfügt die Luftführungsplatte vorteilhaft über hochgezogene Ränder zur seitlichen Führung des Transportriemens. Außerdem ist der Transportriemen zwischen der Luftführungsplatte und der Gegenplatte angeordnet und wird zwischen betreffender Luftführungsplatte und der Gegenplatte aufgenommen. Dadurch kann der Transportriemen gegen die Gegenplatte zur Anlage gebracht werden und läuft ansonsten die entgegengesetzt demgegenüber angeordnete und zu reinigende Oberfläche des Transportriemens auf dem Luftpolster bzw. in Anlage an der Luftführungsplatte.

Im Allgemeinen ist die Reinigungsvorrichtung in eine Vorrichtung zum Transport von Werkstücken und insbesondere Blechplatinen integriert bzw. hiermit verbunden. Das kann besonders vorteilhaft in der Weise erfolgen, dass die fraglichen Blechplatinen aufliegend auf einem Obertrum des Transportriemens transportiert werden. Demgegenüber sind dann die Luftführungsplatte und die Gegenplatte im Untertrum des umlaufend angetriebenen Transportriemens angeordnet. Dadurch wird jeweils der Untertrum des betreffenden Transportriemens respektive die zu reinigende Oberfläche jeweils saugend beaufschlagt, wie dies zuvor bereits beschrieben wurde.

Das Maschinengestell zur Führung und zum Antrieb des Transportriemens ist darüber hinaus und vorteilhaft mit einer Wanne zur Aufnahme der Verunreinigungen ausgerüstet. Die Wanne kann dabei unterhalb der Luftführungsplatte angeordnet sein. Außerdem ist die Wanne meistens mit einem Flüssigkeitsablauf ausgerüstet. Über den Flüssigkeitsablauf kann vom Transportriemen bzw. dessen zu reinigender Oberfläche abgelöstes Öl aus der Wanne entfernt und gegebenenfalls wieder verwertet werden.

Im Ergebnis wird eine Reinigungsvorrichtung für Transportriemen zur Verfügung gestellt und realisiert, die sich grundsätzlich in eine Transportvorrichtung für beispielsweise Blechplatinen integrieren lässt aber auch unabhängig hiervon betrieben werden kann. Die Reinigung des Transportriemens bzw. seiner den Blechplatinen zugewandten und meistens verschmutzten Oberfläche erfolgt dabei erfindungsgemäß berührungslos, nämlich durch einen die besagte Oberfläche beaufschlagenden Unterdruck. Dadurch sind etwaige Beschädigungen des Transportriemens prinzipbedingt ausgeschlossen und wird die Lebensdauer des Transportriemens durch die Reinigungsvorrichtung nicht negativ beeinflusst. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig.1: die findungsgemäße Reinigungsvorrichtung schematisch als Bestandteil einer Transportvorrichtung für Werkstücke und
- Fig. 2: einen Querschnitt durch die Vorrichtung nach Fig. 1.

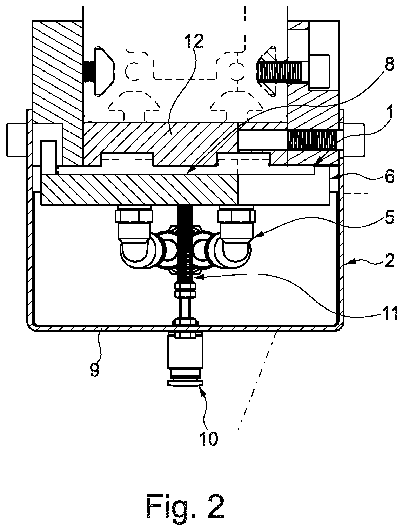

In den Figuren ist eine Reinigungsvorrichtung für Transportriemen 1 dargestellt. Bei dem Transportriemen 1 handelt es sich nicht einschränkend um einen Zahnriemen, wie man insbesondere anhand der Schnittdarstellung in der Fig. 2 nachvollziehen kann. Dazu wird der fragliche Transportriemen 1 an einem Maschinengestell 2 im Umlauf über nicht dargestellte Zahnräder geführt.

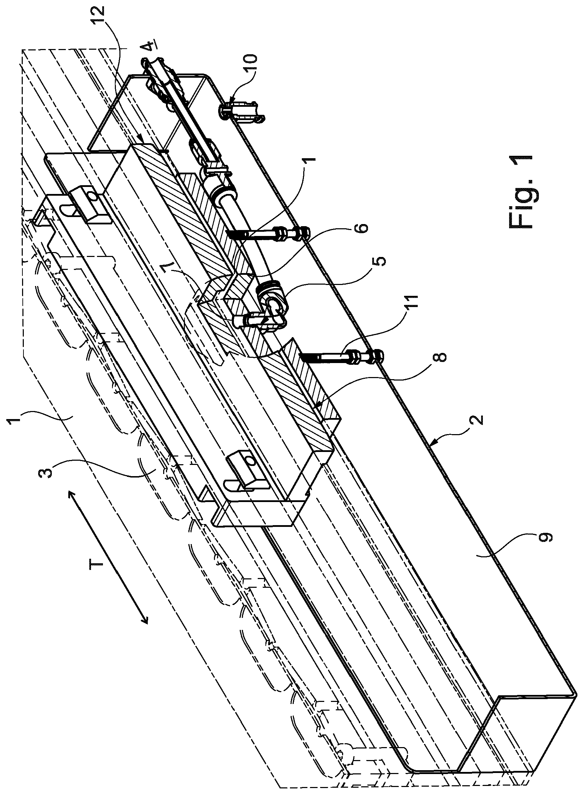

Anhand der Fig. 1 erkennt man, dass der Transportriemen 1 mit Saugtaschen 3 ausgerüstet ist, die mit Unterdruck beaufschlagt werden können. Auf diese Weise lassen sich mit Hilfe des Transportriemens 1 nicht ausdrücklich dargestellte Blechplatinen in einer in der Fig. 1 durch einen Doppelpfeil dargestellten Transportrichtung T befördern, und zwar nach dem Ausführungsbeispiel aufliegend. Das ist selbstverständlich nur beispielhaft zu verstehen und keinesfalls zwingend. Durch den aufliegenden Transport der Blechplatinen im Obertrum des betreffenden Transportriemens 1 kann der insbesondere im Schnitt in der Fig. 2 dargestellte Untertrum des Transportriemens 1 mit einer Reinigungsvorrichtung ausgerüstet werden, die nachfolgend noch näher im Detail beschrieben wird. Die Reinigungsvorrichtung sorgt dafür, dass die jeweils beim umlaufenden Antrieb des Transportriemens 1 nach außen hin weisende und entsprechend dem Ausführungsbeispiel mit den Saugtaschen 3 ausgerüstete und zu Verschmutzungen neigende Oberfläche des Transportriemens 1 gereinigt wird.

Dazu ist eine Luftdruckquelle 4 vorgesehen, welche über eine angeschlossene Luftdruckleitung 5 eine Luftführungsplatte 6 mit Überdruck beaufschlagt. Die Luftführungsplatte 6 ist zu diesem Zweck mit zumindest einer Öffnung 7 ausgerüstet. Über die Öffnung 7 strömt die unter Überdruck stehende und von der Luftdruckquelle 4 abgegebene Luft in einen Saugschlitz 8. Der fragliche Saugschlitz 8 findet sich dabei zwischen der Luftführungsplatte 6 und dem Transportriemen 1. Man erkennt, dass ausgehend von der Luftdruckquelle 4 die unter Überdruck stehende Luft größtenteils vertikal über die Öffnung 7 in den Saugschlitz 8 einströmt und dann größtenteils horizontal durch den Saugschlitz 8 strömt und in Horizontalrichtung umgelenkt wird. Dadurch kommt es an der dem Saugschlitz 8 zugewandten und zu reinigenden Oberfläche des Transportriemens 1 zu einem dort beobachteten Unterdruck und werden auf diese Weise an der betreffenden Oberfläche haftende Verunreinigungen gelöst und über den Saugschlitz 8 abtransportiert.

Die fraglichen Verunreinigungen werden dabei zum Ende des Saugschlitzes 8 transportiert, wobei sich die beiden fraglichen Enden des Saugschlitzes 8 jeweils an den Enden der Luftführungslatte 6 ausbilden. Eine Wanne 9 im Maschinengestell 2 sorgt in diesem Zusammenhang jeweils dafür, dass die Verunreinigungen in der fraglichen Wanne 9 gesammelt werden können. Dazu ist die Wanne 9 zusätzlich mit einem Flüssigkeitsablauf 10 ausgerüstet. Über den Flüssigkeitsablauf 10 kann beispielsweise in der Wanne 9 gesammeltes Öl abgeführt und gegebenenfalls recycelt werden.

Jedenfalls beaufschlagt die Luftdruckquelle 4 die am Transportriemen 1 anliegende Luftführungsplatte 6 mit dem bereits angesprochenen Überdruck. Hierbei kann es sich um einen Überdruck von beispielsweise 1 bis 2 bar handeln. Dadurch lässt sich die Luftdruckquelle 4 einfach bauend realisieren und ist mit geringen Betriebskosten zu rechnen. Durch die Beaufschlagung der Luftführungsplatte 6 mit dem angesprochenen Überdruck kommt es dazu, dass die durch den Saugschlitz 8 zwischen der Luftführungsplatte 6 und dem Transportriemen 1 strömende Luft einerseits umgelenkt und andererseits beschleunigt wird, so dass an der nach außen hin weisenden und zu reinigenden Oberfläche des Transportriemens 1 der besprochene Unterdruck entsteht und die Verunreinigungen hierdurch abgelöst werden.

Zu diesem Zweck ist die Luftführungsplatte 6 an den Transportriemen 1 angestellt. Hierfür sorgt eine der Luftführungsplatte 6 zugeordnete Feder 11. Die Feder 11 beaufschlagt die Luftführungsplatte 6 in Richtung auf den Transportriemen 1 und sorgt dafür, dass die Luftführungsplatte 6 am Transportriemen 1 anliegt. Sobald jedoch die Luftdruckquelle 4 den Saugschlitz 8 mit der unter Überdruck stehenden Luft beaufschlagt, kommt es an dieser Stelle zur Ausbildung des Saugschlitzes 8 und damit zu einem Luftpolster, und zwar zwischen dem Transportriemen 1 einerseits und der Luftführungsplatte 6 andererseits. Das geschieht gegen die Kraft der an dieser Stelle vorgesehenen mehreren Federn 11, welche die Luftführungsplatte 6 in Anlage an den Transportriemen 1 beaufschlagen.

Die von der Luftdruckquelle 4 ausgehende Luft unter Überdruck wird dabei über die Öffnungen 7 in der Luftführungsplatte 6 dem Saugschlitz 8 zugeführt. D.h., die fraglichen Öffnungen 7 kommunizieren mit dem Saugschlitz 8 einerseits und andererseits mit der Luftführungsleitung bzw. Luftdruckleitung 5 und folglich der Luftdruckquelle 4.

Die Öffnung bzw. die jeweiligen Öffnungen 7 in der Luftführungsplatte 6 sind dabei überwiegend senkrecht zur Längserstreckung des Saugschlitzes 8 orientiert. Außerdem ist die Auslegung so getroffen, dass die Luftführungsplatte 6 der Längserstreckung des Transportriemens 1 folgt.

Anhand der Schnittdarstellung in der Fig. 2 erkennt man, dass die Luftführungsplatte 6 mit jeweils hochgezogenen Rändern zur seitlichen Führung des Transportriemens 1 ausgerüstet ist. Dabei wird der Transportriemen zwischen einerseits der Luftführungsplatte 6 und andererseits einer Gegenplatte 12 aufgenommen. Man erkennt, dass der Transportriemen 1 im in der Fig. 2 dargestellten Untertrum zumindest über einen Teil seiner Länge sandwichartig zwischen einerseits der Luftführungsplatte 6 und andererseits der Gegenplatte 12 angeordnet ist bzw. durch das Zusammenspiel beider Platten 6, 12 gegenüber seitlichen Bewegungen festgehalten und geführt wird. D.h., die Luftführungsplatte 6 und auch die Gegenplatte 12 sind jeweils im Untertrum des umlaufend angetriebenen Transportriemens 1 angeordnet.

## Patentansprüche

1. Reinigungsvorrichtung für Transportriemen (1), insbesondere im Zusammenhang mit der Förderung von Blechplatinen, mit einem Maschinengestell (2) zur Führung und zum Antrieb des Transportriemens (1), und mit einer Luftdruckquelle (4) zur Erzeugung eines Unterdruckes in einem Saugschlitz (8), wobei der Transportriemen (1) den Saugschlitz (8) zur Reinigung fortlaufend passiert,
wobei die Luftdruckquelle (4) eine am Transportriemen (1) anliegende Luftführungsplatte (6) mit einem Überdruck beaufschlagt, so dass die durch den Saugschlitz (8) zwischen Luftführungsplatte (6) und Transportriemen (1) strömende sowie vorzugsweise beschleunigte Luft durch einen dadurch an der Riemenoberfläche erzeugten Unterdruck Verunreinigungen löst und abtransportiert,
**dadurch gekennzeichnet, dass** der Transportriemen (1) zwischen der Luftführungsplatte (6) und einer Gegenplatte (12) aufgenommen wird.

2. Vorrichtung nach Anspruch 1, **dadurch gekennzeichnet, dass** die Luftführungsplatte (6) an den Transportriemen (1) angestellt ist.

3. Vorrichtung nach Anspruch 2, **dadurch gekennzeichnet, dass** zur Anstellung der Luftführungsplatte (6) zumindest eine Feder (11) dient.

4. Vorrichtung nach Anspruch 3, **dadurch gekennzeichnet, dass** wenigstens zwei in Axialerstreckung der Luftführungsplatte (6) angeordnete Federn (11) vorgesehen sind.

5. Vorrichtung nach einem der Ansprüche 1 bis 4, **dadurch gekennzeichnet, dass** die Luftführungsplatte (6) zumindest eine mit dem Saugschlitz (8) kommunizierende Öffnung (7) aufweist.

6. Vorrichtung nach Anspruch 5, **dadurch gekennzeichnet, dass** mehrere Öffnungen (7) vorgesehen sind.

7. Vorrichtung nach Anspruch 5 oder 6, **dadurch gekennzeichnet, dass** die jeweilige Öffnung (7) einerseits mit dem Saugschlitz (8) kommuniziert und andererseits an die Luftdruckquelle (4) angeschlossen ist.

8. Vorrichtung nach einem der Ansprüche 5 bis 7, **dadurch gekennzeichnet, dass** die Öffnung (7) überwiegend senkrecht zur Längserstreckung des Saugschlitzes (8) verläuft.

9. Vorrichtung nach einem der Ansprüche 1 bis 8, **dadurch gekennzeichnet, dass** die Luftführungsplatte (6) der Längserstreckung des Transportriemens (1) folgt.

10. Vorrichtung nach einem der Ansprüche 1 bis 9, **dadurch gekennzeichnet, dass** die Luftführungsplatte (6) mit hochgezogenen Rändern zur seitlichen Führung des Transportriemens (1) ausgerüstet ist.

11. Vorrichtung nach einem der Ansprüche 1 bis 10,
**dadurch gekennzeichnet, dass** die Luftführungsplatte (6) und die Gegenplatte (12) im Untertrum des umlaufend angetriebenen Transportriemens (1) angeordnet sind.

12. Vorrichtung nach einem der Ansprüche 1 bis 11, **dadurch gekennzeichnet, dass** eine Wanne (9) zur Aufnahme der Verunreinigungen vorgesehen ist.

13. Vorrichtung nach Anspruch 12, **dadurch gekennzeichnet, dass** die Wanne (9) unterhalb der Luftführungsplatte (6) angeordnet ist.

14. Vorrichtung nach Anspruch 12 oder 13, **dadurch gekennzeichnet, dass** die Wanne (9) einen Flüssigkeitsablauf (10) aufweist.

## Claims

1. A cleaning device for conveying belts (1), in particular in connection with conveying metal sheets, having a machine frame (2) for guiding and driving the conveying belt (1), and having an air pressure source (4) for generating a negative pressure in a suction slot (8), wherein the conveying belt (1) passes through the suction slot (8) continuously for cleaning,
wherein the air pressure source (4) applies a positive pressure to an air guide plate (6) bearing against the conveying belt (1) so that the air that flows through the suction slot (8) between the air guide plate (6) and the conveying belt (1) and is preferably accelerated detaches and transports away dirt by means of a negative pressure generated by the air on the belt surface,
**characterised in that**
the conveying belt (1) is accommodated between the air guide plate (6) and a counter plate (12).

2. The device according to Claim 1, **characterised in that** the air guide plate (6) is placed against the conveying belt (1).

3. The device according to Claim 2, **characterised in that** at least one spring (11) is used for the placement of the air guide plate (6).

4. The device according to Claim 3, **characterised in that** at least two springs (11) are provided, which are arranged in the axial extent of the air guide plate (6).

5. The device according to one of Claims 1 to 4, **characterised in that** the air guide plate (6) has at least one opening (7), which communicates with the suction slot (8).

6. The device according to Claim 5, **characterised in that** multiple openings (7) are provided.

7. The device according to Claim 5 or 6, **characterised in that** each opening (7) communicates with the suction slot (8) on one side and is connected to the air pressure source (4) on the other side.

8. The device according to one of Claims 5 to 7, **characterised in that** the opening (7) runs predominantly perpendicularly to the longitudinal extent of the suction slot (8).

9. The device according to one of Claims 1 to 8, **characterised in that** the air guide plate (6) follows the longitudinal extent of the conveying belt (1).

10. The device according to one of Claims 1 to 9, **characterised in that** the air guide plate (6) is provided with upright edges for laterally guiding the conveying belt (1).

11. The device according to one of Claims 1 to 10, **characterised in that** the air guide plate (6) and the counter plate (12) are arranged on the slack side of the conveying belt (1), which is driven in circulation.

12. The device according to one of Claims 1 to 11, **characterised in that** a trough (9) is provided to receive the dirt.

13. The device according to Claim 12, **characterised in that** the trough (9) is arranged under the air guide plate (6).

14. The device according to Claim 12 or 13, **characterised in that** the trough (9) has a liquid drain (10).

## Revendications

1. Dispositif de nettoyage, destiné à des courroies de transport (1), notamment en relation avec le convoyage de platines de tôle, doté d'un bâti de machine (2), destiné à guider et à entraîner la courroie de transport (1) et doté d'une source d'air comprimé (4), destinée à générer une dépression dans une fente d'aspiration (8), pour le nettoyage, la courroie de transport (1) passant continuellement la fente d'aspiration (8),
la source d'air comprimé (4) sollicitant par une surpression une plaque de guidage d'air (6) adjacente à la courroie de transport (1), de telle sorte que l'air circulant à travers la fente d'aspiration (8), entre la plaque de guidage d'air (6) et la courroie de transport (1) et de préférence accéléré, détache et évacue des salissures par une dépression créée de ce fait sur la surface de la courroie,
**caractérisé en ce que** la courroie de transport (1) est réceptionnée entre la plaque de guidage d'air (6) et une plaque antagoniste (12).

2. Dispositif selon la revendication 1, **caractérisé en ce que** la plaque de guidage d'air (6) est mise en prise sur la courroie de transport (1).

3. Dispositif selon la revendication 2, **caractérisé en ce qu'**au moins un ressort (11) sert à la mise en prise de la plaque de guidage d'air (6).

4. Dispositif selon la revendication 3, **caractérisé en ce qu'**au moins deux ressorts (11) placés dans l'extension axiale de la plaque de guidage d'air (6) sont prévus.

5. Dispositif selon l'une quelconque des revendications 1 à 4, **caractérisé en ce que** la plaque de guidage d'air (6) comporte au moins un orifice (7) communiquant avec la fente d'aspiration (8).

6. Dispositif selon la revendication 5, caractérisé en ce plusieurs orifices (7) sont prévus.

7. Dispositif selon la revendication 5 ou 6, **caractérisé en ce que** l'orifice (7) respectif communique d'une part avec la fente d'aspiration (8) et est raccordé d'autre part sur la source d'air comprimé (4).

8. Dispositif selon l'une quelconque des revendications 5 à 7, **caractérisé en ce que** l'orifice (7) s'écoule majoritairement à la perpendiculaire de l'extension longitudinale de la fente d'aspiration (8).

9. Dispositif selon l'une quelconque des revendications 1 à 8, **caractérisé en ce que** la plaque de guidage d'air (6) suit l'extension longitudinale de la courroie de transport (1).

10. Dispositif selon l'une quelconque des revendications 1 à 9, **caractérisé en ce que** la plaque de guidage d'air (6) est équipée de bords remontés, pour le guidage latéral de la courroie de transport (1).

11. Dispositif selon l'une quelconque des revendications 1 à 10, **caractérisé en ce que** la plaque de guidage d'air (6) la plaque antagoniste (12) sont placées dans le brin inférieur de la courroie de transport (1) entraînée en révolution.

12. Dispositif selon l'une quelconque des revendications 1 à 11, **caractérisé en ce qu'**une cuve (9) est prévue pour réceptionner les salissures.

13. Dispositif selon la revendication 12, **caractérisé en ce que** la cuve (9) est placée en-dessous de la plaque de guidage d'air (6).

14. Dispositif selon la revendication 12 ou 13, **caractérisé en ce que** la cuve (9) comporte une évacuation (10) de liquide.
